## Europäisches Patentamt

## European Patent Office

## Office européen des brevets

(11) Publication number: **0 095 841**
**B1**

# EUROPEAN PATENT SPECIFICATION

(45) Date of publication of patent specification: **06.08.86**

(51) Int. Cl.⁴: **B 60 K 17/02, F 16 D 25/08**

(21) Application number: **83302649.5**

(22) Date of filing: **11.05.83**

(54) Clutch actuation arrangement for a motor vehicle transmission.

(30) Priority: **28.05.82 GB 8215789**

(43) Date of publication of application:
**07.12.83 Bulletin 83/49**

(45) Publication of the grant of the patent:
**06.08.86 Bulletin 86/32**

(84) Designated Contracting States:
**AT BE DE FR GB IT NL SE**

(56) References cited:
**FR-A-2 149 821**
**GB-A- 599 807**
**GB-A-1 027 925**
**GB-A-1 255 002**
**GB-A-1 298 310**
**GB-A-1 453 501**
**GB-A-1 539 879**
**GB-A-2 051 291**
**US-A-2 345 860**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Shirley, Graham John**
**111 Palmer Road Whitnash**
**Leamington Spa Warwickshire (GB)**

(74) Representative: **Cundy, Anthony Brian**
**Anthony Cundy & Company 384 Station Road Dorridge**
**Solihull West Midlands B93 8ES (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

This invention relates to a motor vehicle transmission and more particularly to a motor vehicle transmission including a clutch, a gear box having an input shaft driven by the clutch, a clutch housing enveloping the clutch and having a face thereon, a gearbox casing housing the gearbox and having a face thereon such that when the clutch housing and casing are assembled the two faces are mutually juxtaposed, and an annular hydraulic slave cylinder concentric with the gearbox input shaft and operable to release the clutch to break drive to the input shaft. Such a transmission is known from GB—A— 599807. A similar transmission is disclosed in GB—A—1027925.

A disadvantage of this type of transmission is that because the slave cylinder must be made rotationally and axially fast relative to the gearbox and so is bolted to a face on the gearbox within a bell housing, it is inaccessible. The hydraulic connections to the slave cylinder are also located within the bell housing and are difficult to reach for servicing purposes after the gearbox has been assembled to a vehicle.

An object of the invention is to provide an installation having a slave cylinder concentric with the gearbox input shaft in which the above problems are overcome or reduced.

Accordingly there is provided a motor vehicle transmission including a clutch, a gearbox having an input shaft driven by the clutch, a clutch housing enveloping the clutch and having a face thereon, a gearbox casing housing the gearbox and having a face thereon such that when the clutch housing and casing are assembled the two faces are mutually juxtaposed, and an annular hydraulic slave cylinder concentric with the gearbox input shaft and operable to release the clutch to break drive to the input shaft, characterised in that the slave cyinder has an outward projection thereon whereby hydraulic fluid is fed into the cylinder and said projection is positioned in a passage formed between the opposed faces and extending outwardly from the casing and housing.

Locating the outward projection in a passage between the two faces on the different portions of the gearbox and clutch housing assembly prevents rotation and limits axial movement of the hydraulic cylinder.

Conveniently the groove is formed in the clutch housing face.

This invention is particularly useful with prefilled clutch hydraulic systems in which a clutch hydraulic actuator system is assembled together and filled and bled prior to installation on a vehicle, such a system is illustrated in British Patent No. 1 539 879.

The invention will be described by way of example and with reference to the accompaning drawings in which:—

Figure 1 is a sketch of the gearbox, clutch and clutch actuator of a transmission;

Figure 2 is a longitudinal section through a clutch hydraulic slave cylinder and release bearing as are utilised in the assembly shown in Figure 1;

Figure 3 is a view in the direction of arrow C of Figure 1 of the slave cylinder of Figure 2 in position on the bell housing and also showing the outline of the gearbox housing in dotted lines;

Figure 4 is a section on the line A—A in Figure 3; and

Figure 5 is a section on the line E—E in Figure 3.

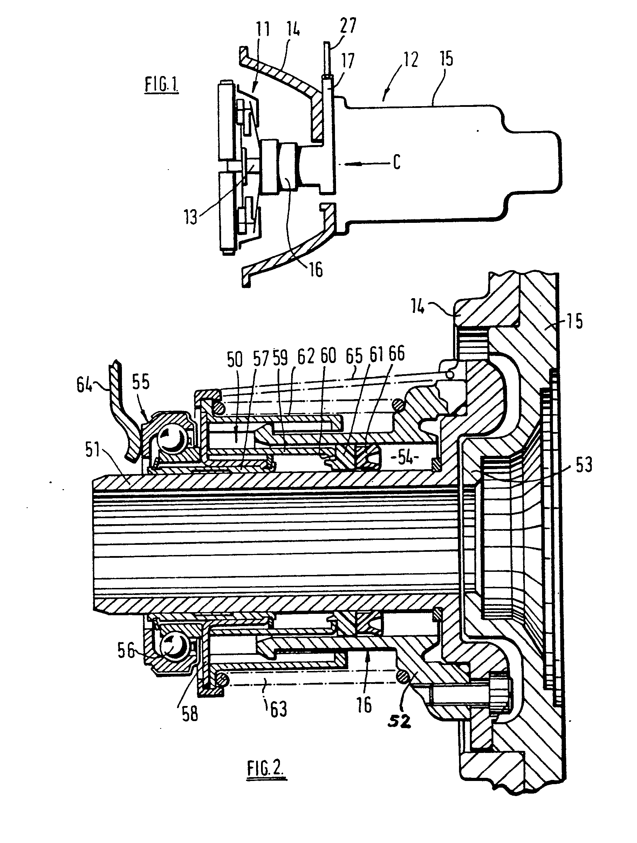

Figure 1 shows parts of a motor vehicle transmission including a friction clutch 11 and a gearbox assembly 12. The gearbox assembly 12 has an input shaft 13 driven by the clutch 11. A clutch housing 14, normally called a bell housing, is secured to the gearbox and houses the clutch 11 and in use bolts against a rear face on an internal combustion engine. A gearbox casing 15 houses various gear trains. The bell housing 14 and gearbox casing 15 are formed as separable components bolted together. A hydraulic clutch slave cylinder 16 is arranged concentrically with the input shaft 13 and has an outward projection 17.

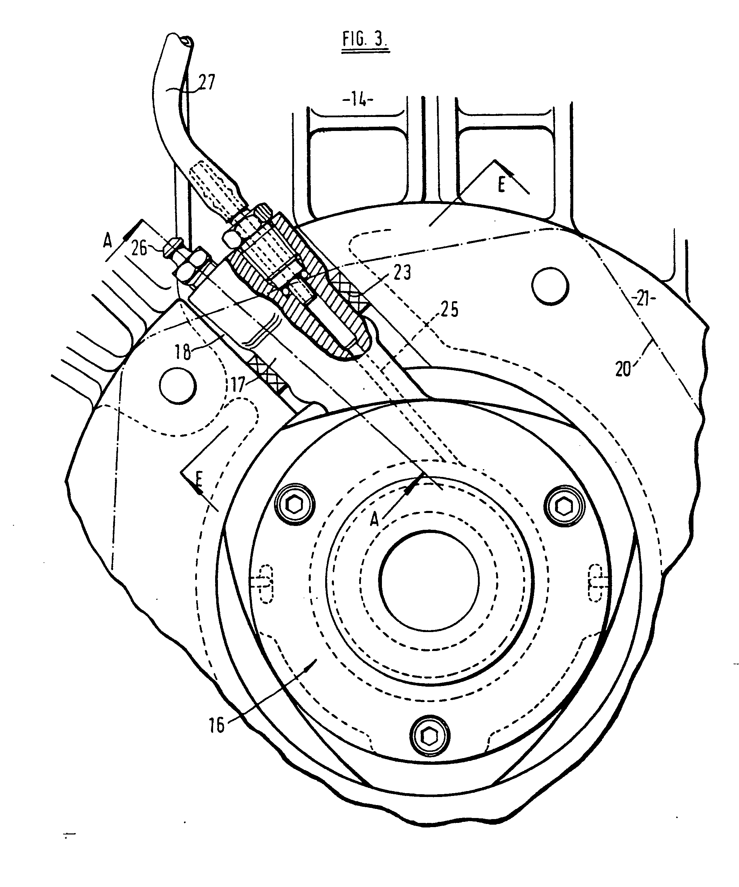

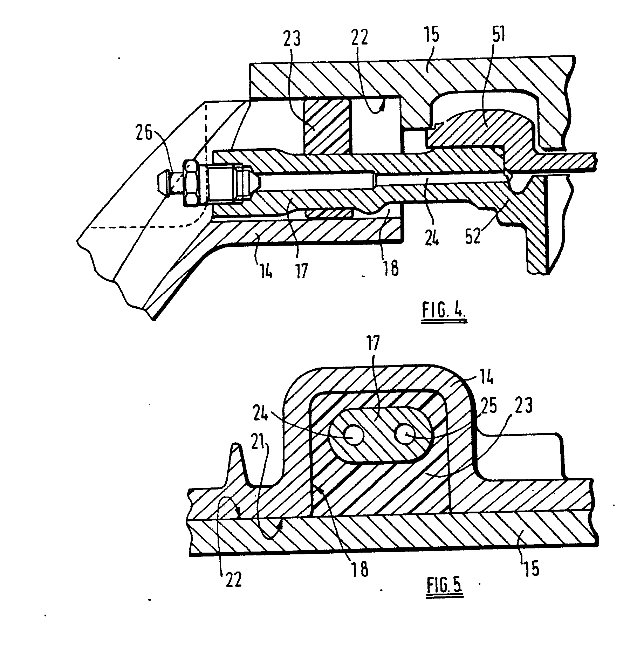

Figures 2 to 5 show the slave cylinder installation in greater detail. The projection 17 is sandwiched between opposed faces 21 and 22 of the bell housing and casing respectively and is accommodated in a passage 18 on the bell housing face 21. The outline of the gearbox casing 15 is shown in ghost at 20 in Figure 3.

The projection 17 extends outwards substantially tangentially to the annular slave cylinder 16 and is located in the passage 18 by an elastomeric collar 23. There are two fluid passageways 24 and 25 running the length of the projection and communicating with the interior of the slave cylinder. One of the passageways 24 has a bleed nipple 26 at its outer end and the other passageway 25 is connected to a hydraulic fluid conduit 27 constituting a supply from a master cylinder (not shown).

The clutch slave cylinder (Figure 2) comprises an annular cylinder formed from two concentric aluminium tubular bodies 51 and 52 which are sealingly bolted together. An annular piston 61 and its associated elastomeric seal 66 slide together in the annular space between bodies 51 and 52. The inner body 51 is extended radially outward to locate in a spigot formed in the bell housing 14 as shown in the lower part of Figure 2. The annular hydraulic chamber 54 formed between the two bodies is connected to the passageways 24 and 25 in the projection 17. The projection 17 is formed integrally with the outer body 52 as a common casting. The inner body 51 extends axially beyond the outer body towards the clutch to provide a support and guide for axial movement of a clutch release bearing assembly 55.

The release bearing assembly comprises a rolling element bearing 56, the stationary inner race of which is carried on a fabricated carrier 50. The carrier 50 has a sleeve portion 57 that slides on the inner body 51, a radial flange 58 that carries the rolling element bearing 56, and a rear flange 60 which locates and guides the tubular sleeve 59 and provides a thrust surface for piston 61. The outer periphery of the flange 58 carries an annular skirt 62 to prevent dust from entering the slave cylinder.

A coil spring 63 external of the cylinder and concentric therewith, acts between the flange 58 and the outer body 52 to urge the rolling element bearing 56 against the release fingers 64 of a diaphragm spring clutch when the cylinder is in use on a vehicle. Before fitting the slave cylinder into its operative position the piston 61 and release bearing assembly are retained in their retracted positions by a shipping strap 65 which is subsequently ruptured on the first actuation of the slave cylinder.

This invention is particularly useful for clutch hydraulic control systems which are assembled, filled with fluid and bled prior to fitting to the vehicle. The arrangement of the invention allows the concentric slave cylinder to be fitted without breaking the hydraulic connections in the system and also provides for ease of servicing during the later life of the vehicle if for example the clutch control system requires bleeding.

## Claims

1. A motor vehicle transmission including a clutch (11), a gearbox (12) having an input shaft (13) driven by the clutch, a clutch housing (14) enveloping the clutch and having a face (21.—Figure 5) thereon, a gearbox casing (15) housing the gearbox and having a face (22—Figure 5) thereon such that when the clutch housing (14) and casing (15) are assembled the two faces are mutually juxtaposed, and an annular hydraulic slave cylinder (16) concentric with the gearbox input shaft (13) and operable to release the clutch (11) to break drive to the input shaft (13) characterised in that the slave cylinder (16) has an outward projection (17) thereon whereby hydraulic fluid is fed into the cylinder and said projection is positioned in a passage (18—Figure 5) formed between the opposed faces (21, 22) and extending outwardly from the casing and housing.

2. A transmission according to claim 1, characterised in that the projection of the slave cylinder also has a bleed nipple (26) thereon whereby the hydraulic system may be bled.

3. A transmission according to claim 2, characterised in that there are two fluid passageways (24, 25) within the projection (17), one leading from the hydraulic supply (27) and the other leading to the bleed nipple (26).

4. A tranmission according to claim 1 or claim 2 or claim 3, characterised in that a groove (18) is formed in the face (21) on the clutch housing (14) to form the passage.

5. A transmission according to any one of claims 1 to 4, characterised in that the projection (17) of the slave cylinder is located within the passage in the clutch housing by an elastomeric collar (23) which surrounds the projection.

## Patentansprüche

1. Kraftwagengetriebe mit einer Kupplung (11), einem Getriebe (12), das eine von der Kupplung angetriebene Eingangswelle (13) hat, einem Kupplungsgehäuse (14) das die Kupplung umhüllt und eine Stirnfläche (21—Figur 5) daran hat, einem Getriebegehäuse (15), welches das Getriebe aufnimmt und eine Stirnfläche (22—Figur 5) daran hat, derart, daß wenn das Kupplungsgehäuse (14) und das Gehäuse (15) zusammengebaut sind, die beiden Stirnflächen aneinander angrenzen, und einem ringförmigen hydraulischen Nebenzylinder (16), der konzentrisch zu der Getriebeeingangswelle (13) und betätigbar ist, um die Kupplung (11) auszurücken, um den Antrieb zu der Eingangswelle (13) zu unterbrechen, dadurch gekennzeichnet, daß der Nebenzylinder (16) einen nach außen gehenden Vorsprung (17) daran hat, wodurch Hydraulikflüssigkeit in den Zylinder eingeführt wird, und der Vorsprung in einem Durchgang (18—Figur 5) angeordnet ist, der zwischen den sich gegenüberliegenden Stirnflächen (21, 22) gebildet ist und sich von den Gehäusen aus nach außen erstreckt.

2. Getriebe nach Anspruch 1, dadurch gekennzeichnet, daß der Vorsprung des Nebenzylinders auch einen Entlüftungsnippel (26) daran hat, wodurch das Hydrauliksystem entlüftet werden kann.

3. Getriebe nach Anspruch 2, dadurch gekennzeichnet, daß zwei Flüssigkeitsdurchgänge (24, 25) in dem Vorsprung (17) sind, von denen der eine von der Hydraulikzufuhr (27) herführt und der andere zu dem Entlüfungsnippel (26) führt.

4. Getriebe nach Anspruch 1 oder Anspruch 2 oder Anspruch 3, dadurch gekennzeichnet, daß eine Rille (18) in der Stirnfläche (21) des Kupplungsgehäuses (14) gebildet ist, um den Durchgang zu bilden.

5. Getriebe nach irgendeinem der Ansprüche 1 bis 4, dadurch gekennzeichnet, daß der Vorsprung (17) des Nebenzylinders in dem Durchgang in dem Kupplungsgehäuse durch einen elastomeren Ring (23) festgehalten ist, der den Vorsprung umgibt.

## Revendications

1. Transmission pour véhicule à moteur comprenant un embrayage (11), une boîte de vitesses (12) présentant un arbre d'entrée (13) entraîné par l'embrayage, un boîtier d'embrayage (14) enveloppant l'embrayage et présentant sur lui une face (21—Fig. 5), un carter de boîte de vitesses (15) logeant la boîte de vitesses et présentant sur lui une face (22—Fig. 5) telle que, lorsque le boîtier d'embrayage (14) et le carter (15) sont assemblés, les deux faces sont mutuellement juxtaposées, et un cylindre hydraulique annulaire secondaire (16) concentrique à l'arbre d'entrée de boîte de vitesses (13) est manoeuvrable pour débrayer l'embrayage (11) de façon à interrompre l'entraînement vers l'arbre d'entrée (13), caractérisée en ce que le cylindre secondaire (16) présente sur lui une saillie vers l'extérieur (17), grâce à quoi un fluide hydraulique est amené dans le cylindre et ladite projection est positionnée dans un passage (18—Fig. 5) ménagé entre les faces opposées (21, 22) et s'étendant vers l'extérieur à partir du carter et du boîtier.

2. Transmission selon la revendication 1, caractérisée en ce que la saillie du cylindre secondaire présente également sur lui un raccord de purge (26) à l'aide duquel le système hydraulique peut être purgé.

3. Transmission selon la revendication 2, caractérisée en ce qu'il existe deux passages de fluide (24, 25) à l'intérieur de la saillie (17), l'un provenant de la source hydraulique (27) et l'autre conduisant au raccord de purge (26).

4. Transmission selon la revendication 1 ou la revendication 2 ou la revendication 3, caractérisée en ce qu'une gorge (18) est ménagée dans la face (21) située sur le boîtier d'embrayage (14), afin de former le passage.

5. Transmission selon l'une quelconque des revendications 1 à 4, caractérisé en ce que la saillie (17) du cylindre secondaire est positionnée à l'intérieur du passage situé dans le boîtier d'embrayage à l'aide d'un collier en élastomère (23) qui entoure cette saillie.

FIG. 1.

FIG. 2.

FIG. 3.

FIG. 4.

FIG. 5